Europäisches Patentamt

European Patent Office

Office européen des brevets

(19)

(11) Publication number: **0 190 002**
A2

## (12) EUROPEAN PATENT APPLICATION

(21) Application number: 86300407.3

(22) Date of filing: 21.01.86

(51) Int. Cl.⁴: **C 08 L 33/00**
C 08 L 41/00, D 06 P 1/52
D 06 P 1/613

(30) Priority: 30.01.85 GB 8502331

(43) Date of publication of application:
06.08.86 Bulletin 86/32

(84) Designated Contracting States:
BE DE FR GB IT NL SE

(71) Applicant: ALLIED COLLOIDS LIMITED
P.O. Box 38 Low Moor
Bradford West Yorkshire, BD12 0JZ(GB)

(72) Inventor: Allen, Adrian S.
6 Beechwood Drive
Skipton West Yorkshire(GB)

(72) Inventor: Barrett, Neil A.
Brown Hurst Cottage Mount Tabor
Halifax West Yorkshire(GB)

(72) Inventor: Humphries, Alan
8 Mallinson Close
Harrogate North Yorkshire(GB)

(74) Representative: Lawrence, Peter Robin
Broughton et al,
GILL JENNINGS & EVERY 53-64 Chancery Lane
London WC2A 1HN(GB)

(54) Polymeric compositions, their preparation and their uses in printing pastes.

(57) A composition comprising a water soluble, low molecular weight, anionic polymer and a diester of a polyethylene glycol with a fatty acid can be included, generally in combination with a particulate, cross linked, water swellable polymeric thickener, in a textile print paste in order to reduce flushing during printing.

EP 0 190 002 A2

Croydon Printing Company Ltd.

ALLIED COLLOIDS LIMITED                    60/2390/02

POLYMERIC COMPOSITIONS, THEIR PREPARATION AND THEIR USES
IN PRINTING PASTES

It is well known to thicken textile printing pastes by the inclusion of a synthetic polymer, which is generally anionic and cross-linked. The thickening polymer may be provided as a dry powder, as an emulsion in water, or as a suspension or dispersion in non-aqueous liquid. In use the polymer exists as a swollen microgel and the thickening effect usually depends, at least in part, upon ionic repulsion of polymer chains. The presence of electrolyte reduces the ionic repulsion and thus the thickening effect.

If the electrolyte is to be included in the printing paste the resultant reduction in thickening effect can be satisfactorily accommodated by the printer, by modification of the printing paste recipe, but this is less easily done if the electrolyte is on the fabric.

The printer generally requires that the print on the textile should have a very sharp outline but it has been observed that in some instances this is not achieved since an effect known as flushing, or alternatively bleeding, haloing or migration, may occur. It seems that this flushing effect may be due to loss of print viscosity on the textile as a result of electrolyte on the textile, either as a result of contamination or as a deliberate application. This electrolyte causes local reductions in viscosity as a result of which colour may wick by capillary action through the yarn from which the textile is formed.

The electrolyte on the textile may be due to inadequate washing off after bleaching or other fabric preparation processes or may be due to the application of a special finish to the textile prior to printing, such as a resin finish with methylolated melamine or urea derivatives cured by a latent acid catalyst.

Flushing can also occur on some fabrics for reasons not related to the effect of electrolyte, and in particular on fabrics formed of 100% polyester woven or knitted from monofilament yarn.

Flushing creates a serious problem for the printer and print paste formulator using synthetic thickeners, particularly because the effect, for any particular paste, may vary from one textile to another.

Any additive that may be included in a print paste formulation and that will eliminate flushing on all these different textiles would obviously be of great benefit to the textile printing industry.

According to the invention a composition suitable for incorporation in a print paste for reducing or preventing flushing comprises (a) a water soluble, low molecular weight, anionic polymer and (b) a diester of a polyethylene glycol with a fatty acid.

The compositions of the invention may also include a thickener, generally a synthetic polymeric thickener, as component (c). This thickener is preferably a synthetic, particulate, cross-linked, water swellable, thickening polymer.

The compositions of the invention may be the final print paste, for instance formed by adding components (a) and (b) separately to the other components of the paste, or may be a blend of components (a) and (b), and preferably (c), that can then be mixed with the other components needed to form the paste.

Preferred compositions according to the invention are substantially anhydrous dispersions in a non-aqueous liquid of components (a) and (b) or, in particular, components (a), (b) and (c). Component (b) is usually a relatively low melting solid and a method according to the invention for making the preferred compositions comprises homogenising component (b) at a temperature above its melting point into a substantially anhydrous dispersion in a non-aqueous liquid of component (c) and adding component (a) after or, preferably, before homogenising component (b) into the dispersion. Thus a substantially anhydrous dispersion of components (a) and (c) may be formed and molten component (b) may then be homogenised into it, for instance using vigorous agitation or other conventional means for homogenisation.

We have surprisingly found that each of components (a) and (b) can, individually, sometimes give reduced flushing but that in combination they give a synergistic reduction in flushing, or synergistic improvement in print quality. The amount of each of component (a) and (b), based on the weight of the mixture of components (a) and (b), must be at least 3% and is usually between 5% and 95%. Within these ranges synergistic improvement in print quality is obtainable on various textiles but best results are generally obtained when the amount of component (a) is from 40 to 80% by weight of the mixture as such mixtures are generally capable of synergistically reducing, and often totally eliminating, flushing on substantially all textiles.

The amount of the mixture of components (a) and (b) required in a print paste to prevent flushing depends on the substrate being printed and the type of thickening agent employed but will generally be in the range 0.05% to 5.0% by weight but most cases require 0.2% to 1.0% by weight of the total print paste.

The amount of thickener is often typical of the amounts conventionally used in printing pastes. It is usually from 0.5 to 5, preferably 1 to 3, times the amount of the combined weight of components (a) and (b).

Another advantage of the use of components (a) and (b), preferably in the proportions discussed above, is that it can reduce the tendency of print pastes to gel. Gelling is a particular problem with pastes containing certain black pigments and the incorporation of the defined mixtures can eliminate or minimise this problem.

The water soluble, low molecular weight, anionic polymer may be formed by polymerisation of one or more anionic monomers, optionally together with non-ionic monomers. The amount of anionic monomer is usually at least 30%, preferably at least 50% and most preferably 85 to 100% by weight of the monomers.

The monomers are usually ethylenically unsaturated, often acrylic. Suitable anionic monomers are ethylenically unsaturated carboxylic or sulphonic acids preferably acrylic acid, methacrylic acid, 2-acrylamido-2-methyl propane sulphonic acid (AMPS), allyl sulphonic acid and maleic acid. Suitable non-ionic monomers include acrylamide or a $C_{1-4}$ alkyl acrylate, such as butyl acrylate.

Particularly preferred polymers are homopolymers of acrylic acid or methacrylic acid or copolymers of acrylic acid with AMPS or maleic acid, the amount of acrylic acid generally being above 50% by weight of the monomers. The acid groups are usually in the form of a salt with alkali metal, amine or ammonia, most preferably formed by neutralisation with sodium hydroxide or ammonia.

The molecular weight must be below 50,000 and is preferably below 10,000, most preferably below 5,000. It must be above 1,000 and is preferably above 2,000. For best results the molecular weight is generally in the range 3,000 to 4,000.

The diester of polyethyleneglycol and fatty acid (component (b)) may be derived from polyethyleneglycol of molecular weight about 4,000 to about 20,000, preferably about 8,000. The fatty acid used to prepare the diester may have alkyl groups of 12 to 22 or 24 carbons but 16 to 18 is preferred.

The thickening polymer (component (c)) must be particulate and cross-linked and water swellable and thus creates a microgel structure in the aqueous print paste, usually a neutralised aqueous print paste. Usually the thickening polymer is anionic, either being formed from anionic monomers alone or a blend with non-ionic monomers in an amount up to 90%, usually up to 50%. It is also possible to use non-ionic cross-linked thickeners. The monomers are usually ethylenically unsaturated, often acrylic, monomers. Suitable anionic and non-ionic monomers include those listed above for component (a).

Suitable polymers include cross-linked homopolymers of acrylic acid, copolymers of acrylic acid with acrylamide or alkyl vinyl ethers, copolymers of maleic anhydride with alkyl vinyl ethers or ethylene, copolymers of AMPS with acrylamide, and copolymers of acrylic or methacrylic acid with lower alkyl acrylates such as ethyl acrylate. Suitable copolymers are described in EP 161038.

Other suitable thickening polymers (c) are copolymers of, for instance, acrylic or methacrylic acid, optionally with a lower alkyl acrylate, and a comonomer that provides a pendant hydrophobic group, the monomer generally having the formula MQR where M is a polymerisable moiety, generally an ethylenically unsaturated moiety, Q is a chain of at least 4 and preferably at least 8 chain atoms and R is a hydrocarbyl group of at least 8 carbon atoms. Q generally includes a polyoxyalkylene chain and the monomer may be made by reacting a polyoxyalkylene derivative of an alcohol or phenol ROH with an ethylenically unsaturated monomer. The monomer MQR may, for instance, be a monoester formed between this derivative and acrylic or methacrylic acid or a diester formed with itaconic acid or it may be an allyl ether of the polyoxyalkylene derivative.

The polyoxyalkylene chain preferably includes, and most preferably consists of, oxyethylene groups. It generally contains at least 5 and often above 10, for instance 20 to 100 of these groups. The hydrocarbyl group R generally contains from 8 to 30, preferably 10 to 24 and most preferably 12 to 18 carbon atoms. It may be selected from alkyl, for instance octyl, lauryl or stearyl, alkaryl such as ethyl benzene, aryl such as naphthyl, aralkyl such as alkyl phenyl wherein the alkyl group generally contains 6 to 12 carbon atoms, cycloalkyl (including polycyclic alkyl) or mixtures. Preferred groups are alkyl and aralkyl groups. Suitable monomers and copolymers are described in, for instance, EP 13836 and EP 109820.

The thickening polymer may be cross-linked by the incorporation of conventional cross-linking agent such as methylene-bis-acrylamide or any other suitable di-ethylenically unsaturated compound. The amount of cross-linking agent, combined with the molecular weight of the polymer, must be such that the polymer acts as an effective thickener, especially in a neutralised paste. Acid groups are generally present, in the final paste, in salt form.

The thickener may be provided as a powder or, if it is substantially unswollen in the acid form, as an acidic emulsion in water that can be converted to the swollen form by the addition of alkali. Preferably the cross-linked thickener is introduced in the form of a dispersion of swollen or swellable particles dispersed in a non-aqueous liquid. The dispersion may be substantially anhydrous and may have been made by reverse phase, generally suspension, polymerisation for instance broadly as described in EP 126528. Suitable suspension stabilisers that may be used include materials as discussed in , for instance, EP 126528, US 4,339,371 and BP 1,482,515. The unswollen particle size of the polymer particles is generally below 10μm, often below 3μm.

Although component (a) can be utilised in the form of an aqueous solution, for instance if it is added directly to the print paste, it also is preferably in the form of a dispersion of polymer particles in a non-aqueous liquid, this dispersion also preferably being substantially anhydrous. For instance an aqueous solution of component (a) may be emulsified in the presence of a low HLB surfactant into a suitable non-aqueous liquid and may be subjected to dehydration, for instance by azeotropic distillation. Preferably the dispersions in non-aqueous liquid of components (a) and (c) are blended (preferably as dehydrated dispersions), component (b) is heated to a temperature above its melting point and is then homogenised into the mixed dispersion in non-aqueous liquid, preferably while maintaining this dispersion at a temperature above the melting point of component (b). The dispersion may then be cooled.

The print paste may be formulated using components (a) and (b) with otherwise conventional ingredients such as suitable colourant, which may be a pigment or dye, volatile base, generally ammonia, and binder latex, in an aqueous base. Conventional pigment paste binders may be used, typically acrylic binder such as binders based on alkyl acrylates such as ethyl acrylate, for instance copolymerised with methylolacrylamide.

The textile may be, for instance, a carpet or a woven or knitted cloth.

EXAMPLE 1

A series of print pastes were formulated by blending together 0.5 parts 0.880 ammonia, the specified amount of a commercial binder latex based on a copolymer of ethyl acrylate and methylolacrylamide, 4 parts of the specified pigment, the specified amount of a 50% active dispersion of cross-linked polyammonium acrylate in a mineral oil containing minor amounts of dispersing agents and emulsifiers (as component (c), the thickener), the specified amount of a 40% aqueous solution of polysodium acrylate molecular weight 3,500 (as component (a)), the specified amount of a 20% active aqueous paste of a diester of polyethylene glycol molecular weight 8,000 in which the alkyl groups of the diester were derived from commercial stearine comprising about 60% stearic acid, 37% palmitic acid and 3% myristic acid (component (b)) and water to make 100 parts.

In each paste the amount of thickener was selected such that the print paste viscosity was 20,000 cps measured with a Brookfield RVT viscometer at speed 10 rpm, spindle 6 and 20°C.

Flushing on various fabric samples was examined by printing through a 156T screen having a number of bars, lines and criss-cross patterns as a design using a Johannes Zimmer MDF-240 laboratory printing machine with 1 pas of a No. 3 bar using magnet pressure 3 and magnet speed 5. After printing, the fabric was left for 2 minutes to allow any flushing to develope then dried at 150°C for 1 minute using a Benz Laboratory Stenter.

The fabrics printed were:-

Fabric 1 - Badly prepared (with residual electrolyte contamination) 67/33 polyester/cotton plain weave (Pastes 1 to 8).

Fabric 2 - Pre-resinated 50/50 polyester/cotton plain weave (Pastes 9 to 12)

Fabric 3 - Knitted 100% monofilament yarn polyester (no detectable electrolyte) (Paste 13).

The pigments used are the following:-

1.      Acramin Black FBRK

2.      Imperon Blue KRR

3.      Acramin Red BRC (80%)

4.      Acramin Black FPV

Print quality was assessed as grades A (indicating serious flushing), B (flushing) and C (no flushing).

| Paste | 1 | 2 | 3 | 4 | 5 | 6 | 7 |
|---|---|---|---|---|---|---|---|
| Pigment | 1 | 1 | 1 | 1 | 2 | 2 | 3 |
| Binder latex % | 10 | 10 | 10 | 10 | 10 | 10 | 10 |
| Thickener (50%) (c) | 1.2 | 2.0 | 1.2 | 2.0 | 1.6 | 2.2 | 1.5 |
| Component (a) (40%) | – | 0.6 | – | 0.6 | – | 0.6 | – |
| Component (b) (20%) | – | – | 0.4 | 0.4 | – | 0.4 | – |
| Ammonium Sulphate | – | – | – | – | – | – | – |
| (a):(b) Dry weight | – | – | – | 3:1 | – | 3:1 | – |
| Dry % (a)+(b) in paste | – | – | – | 0.32 | – | 0.32 | – |
| Flushing | A | B | B | C | A | C | A |

0190002

| Paste | 8 | 9 | 10 | 11 | 12 | 13 |
|---|---|---|---|---|---|---|
| Pigment | 3 | 4 | 4 | 4 | 4 | 1. |
| Binder latex % | 10 | 12 | 12 | 12 | 12 | 10 |
| Thickener (50%) (c) | 1.9 | 1.0 | 1.2 | 1.9 | 1.9 | 1.7 |
| Component (a) (40%) | 0.6 | – | – | 1.0 | – | 0.05 |
| Component (b) (20%) | 0.4 | – | 1.5 | 1.5 | 1.5 | 1.9 |
| Ammonium Sulphate | – | – | – | – | 0.25 | – |
| (a):(b) Dry weight | 3:1 | – | – | 4:3 | – | 1:19 |
| Dry % (a)+(b) in paste | 0.32 | – | – | 0.7 | – | 0.4 |
| Flushing | C | A | B | C | B | C |

It was observed that each of the pastes according to the invention not only gave no flushing but also gave excellent definition and colour yields. This is in contrast to some materials that have been proposed previously for preventing flushing in that they have frequently had a very bad effect on colour quality.

Paste 9 formed a gel and could not be printed.

Paste 12 includes ammonium sulphate as an electrolyte in an amount such that the paste has the same viscosity as when component (a) (also an electrolyte) is used in place of it (see Paste 11). The improvement in Paste 11 compared to Paste 12 shows that component (a) does not merely act as an electrolyte but instead gives a genuine synergistic effect with component (b).

EXAMPLE 2

A dispersion in mineral oil was prepared containing by weight 33.6% of cross-linked polyammonium acrylate, 12.2% of polysodium acrylate at molecular weight 3,500 and 9.2% by weight of polyethyleneglycol 8,000 distearate and minor amounts of dispersants and emulsifiers.

Ammonium acrylate with a small amount of methylenebisacrylamide was subjected to reverse phase suspension polymerisation in mineral oil, (generally as described in EP 161038) and the resulting dispersion was dehydrated by azeotropic distillation.

100 parts by weight of a commercially available solution of about 40% polysodium acrylate molecular weight 3,500 in water was diluted with 33.33 parts by weight of water then dispersed in a mixture comprising 18 parts by weight of mineral oil (Pale Oil 60), 73 parts by weight of petroleum fraction of boiling range 154-168°C (SBP11), 4 parts by weight of sorbitan mono-oleate and 4.7 parts by weight of a 2:1 molar copolymer of ceto-stearyl methacrylate:methacrylic acid. The dispersion was subjected to azeotropic distillation to provide a dehydrated dispersion of polymer in oil.

The two polymer dispersions were blended, heated to about 90°C and the polyethylene glycol 8000 distearate was melted at about 90°C and homogenised into the mixed polymer dispersion whilst maintaining a temperature of about 90°C, after which the mixture was cooled to yield a liquid dispersion.

This product was used to prepare pigmented printing pastes using a number of pigments. The pastes were printed onto fabrics 1, 2 and 3 and in all cases no flushing was observed and bright clear prints were obtained.

EXAMPLE 3

Print Paste 11 of Example 1 was prepared with a number of variations of components A and B as follows:-

0190002

| PASTE | COMPONENT A | COMPONENT B |
|---|---|---|
| 11a | Polysodium acrylate M.w. 8000 | PEG 8000 Di-stearate |
| 11b | Polysodium acrylate M.w. 3500 | PEG 8000 Di-behenate |
| 11c | 90/10 - sodium acrylate/ acrylamide copolymer M.w. 3000 | PEG 8000 Di-stearate |
| 11d | 90/10 - sodium acrylate/ butyl acrylate copolymer M.w. 4000 | PEG 8000 Di-palmitate |
| 11e | 80/20 - sodium acrylate/ sodium AMPS copolymer M.w. 3500 | PEG 8000 Di-stearate |
| 11f | Polysodium acrylate M.w. 3500 | PEG 6000 Di-stearate |
| 11g | Polysodium acrylate M.w. 3500 | PEG 10000 Di-stearate |
| 11h | Polyammonium acrylate M.w. 4500 | PEG 8000 Di-stearate |

The print pastes were printed on Fabric 2 and all had excellent definitions and colour yield with no flushing.

13        0190002

CLAIMS

1. A composition suitable for reducing or preventing flushing by a print paste and comprising (a) a water soluble, low molecular weight, anionic polymer and (b) a diester of a polyethylene glycol with a fatty acid and wherein the amount of each of components (a) and (b) is at least 3% by weight of the combined weight of components (a) and (b).

2. A composition according to claim 1 in which component (a) is a water soluble polymer of ethylenically unsaturated carboxylic or sulphonic acid copolymerised with 0 to 50% by weight ethylenically unsaturated non-ionic monomer and having a molecular weight of 1,000 to 50,000.

3. A composition according to claim 1 or claim 2 in which component (a) is a water soluble polymer of acrylic acid.

4. A composition according to any preceding claim in which component (a) has a molecular weight of 2,000 to 5,000.

5. A composition according to any preceding claim in which component (b) is a diester of a polyethylene glycol having molecular weight about 4,000 to about 20,000 with a fatty acid wherein the alkyl groups contain 12 to 22 carbon atoms.

6. A composition according to any preceding claim wherein component (b) is a diester of a polyethylene glycol having molecular weight about 8,000 with a fatty acid in which the alkyl groups contain 16 to 18 carbon atoms.

7. A composition according to any preceding claim containing 40 to 80% component (a) and 60 to 20% component (b), by weight of the blend of (a) and (b).

8. A composition according to any preceding claim also including, as component (c), a particulate, cross linked, water swellable, polymeric thickener.

9. A composition according to claim 8 in which component (c) is a cross linked polymer of ethylenically unsaturated carboxylic or sulphonic acid copolymerised with 0 to 90% by weight ethylenically unsaturated non-ionic monomer.

10. A composition according to claim 8 or claim 9 in which component (c) is cross linked polyacrylic acid or a cross linked copolymer of acrylic acid and acrylamide.

11. A composition according to any of claims 8 to 10 in the form of a substantially anhydrous dispersion of components (a), (b) and (c) in a non-aqueous liquid.

12. A composition according to any of claims 8 to 10 in the form of a print paste.

13. A method in which a textile is printed with a print paste and in which the print paste is a composition according to claim 12.

14. A method of making a composition according to claim 11 comprising blending a dehydrated dispersion in non-aqueous liquid of component (a) with a dehydrated dispersion in non-aqueous liquid of component (c) and then homogenising molten component (b) into the blended dispersion.